# EUROPÄISCHE PATENTSCHRIFT

(11) **EP 2 144 950 B1**
(45) Veröffentlichungstag und Bekanntmachung des Hinweises auf die Patenterteilung: **13.08.2014**
(21) Anmeldenummer: 09717203.5
(22) Anmeldetag: 02.03.2009
(51) Int. Cl.: C08G 63/692

(54) **HALOGENFREIE FLAMMSCHUTZMITTEL**
HALOGEN-FREE FLAME RETARDANT
RETARDATEUR DE FLAMME NON HALOGENE

(30) Priorität: 06.03.2008 DE 102008012806
(43) Veröffentlichungstag der Anmeldung: 20.01.2010
(73) Patentinhaber: Schill + Seilacher GmbH, 71032 Böblingen (DE)
(72) Erfinder: GLAUNER, Udo, 71065 Sindelfingen (DE); STORZER, Uwe, 72076 Tübingen (DE); KELLER, Holger, 21391 Reppenstedt (DE); RIECKERT, Horst, 75365 Calw (DE)
(74) Vertreter: Prinz & Partner
(86) Internationale Anmeldenummer: PCT/EP2009/001463
(87) Internationale Veröffentlichungsnummer: WO 2009/109347

(56) Entgegenhaltungen:
- DE-A1- 2 646 218
- DE-A1- 2 816 100

## Beschreibung

Die Erfindung betrifft ein halogenfreies Flammschutzmittel sowie eine thermoplastische Polymerzusammensetzung, insbesondere auf der Grundlage von Polyamiden oder Polyestern, die das halogenfreie Flammschutzmittel enthält. Die thermoplastische Polymerzusammensetzung eignet sich insbesondere zur Herstellung von Polymerfasern im Schmelzspinnverfahren.

Für die Herstellung flammhemmender thermoplastischer Polymere ist es aus wirtschaftlichen Gründen wünschenswert nichtreaktive Flammschutzmittel einzusetzen, da sich diese durch ein einfaches physikalisches Mischen bzw. Lösen in ein Grundpolymer einbringen lassen. Die Herstellung flammhemmender thermoplastischer Polymere mit reaktiven Flammschutzmitteln erfordert dagegen immer mindestens einen oder mehrere chemische Verfahrensschritte, die in aller Regel bereits bei der Herstellung des Grundpolymers durchgeführt werden.

Während nichtreaktive Flammschutzmittel eine sogenannte, late addition' Verfahrensführung zulassen, bei der das Flammschutzmittel dem Grundpolymer erst kurz vor der Verarbeitung, in der Regel während eines Extrudierprozesses, beigemischt wird, ist eine solche Verfahrensführung bei Verwendung reaktiver Flammschutzmittel normalerweise nicht möglich, da diese ja chemische Reaktionen mit dem Grundpolymer eingehen und unter den beim Extrudieren vorherrschenden Temperatur- und Druckbedingungen in den meisten Fällen einen Polymerabbau bewirken.

Für die Herstellung flammhemmend ausgerüsteter Polyamide sind bereits seit langem eine ganze Reihe nichtreaktiver Flammschutzmittel in der technischen Anwendung. Diese beruhen jedoch meistens auf halogen- oder antimonhaltigen Substanzen, die in letzter Zeit durch ihr negatives öko- und genotoxikologisches Potential in die öffentliche Kritik geraten sind. Aus diesem Grunde werden in zunehmendem Maße halogen- und antimonfreie unreaktive Flammschutzmittel wie beispielsweise roter Phosphor, Melaminpolyphosphat, Melamincyanurat oder Aluminiumphosphinate verwendet, wie sie in der EP 1 070 754 A beschrieben sind, und die sich gegenüber den halogen- und antimonhaltigen Substanzen durch erheblich günstigere toxikologische Eigenschaften auszeichnen.

Alle vorgenannten Flammschutzmittel sind jedoch nur bedingt für die Verwendung in Schmelzspinnverfahren geeignet, die zur Herstellung von Polyamid- oder Polyesterfasern eingesetzt werden. Die halogenierten Flammschutzmittel können die Spinndüsen bei den beim Verspinnen üblichen Temperatur- und Druckbedingungen in erheblicher Weise schädigen. Dagegen sind Melaminpolyphosphat, Melamincyanurat oder Aluminiumphosphinate nur in ungenügendem Maße in Polyamiden oder Polyestern löslich, wodurch sich eine inhomogene Verteilung des Flammschutzmittels im Grundpolymer ergibt. Dies führt insbesondere beim Schmelzspinnen zu erheblichen Beeinträchtigungen, da die Spinndüsen verstopfen. Im Falle des roten Phosphors können nur intensiv rot gefärbte Faserprodukte erhalten werden, wie aus der DE 21 48 348 A bekannt ist.

Die DE 26 46 218 A1 offenbart phosphorhaltige Flammschutzmittel, die durch Addition von 9,10-Dihydro-9-oxa-10-phospha-phenanthren-10-oxid (DOPO) an eine ungesättigte Verbindung mit wenigstens einer esterbildenden funktionellen Gruppe und weitere Umsetzung mit einer esterbildenden Verbindung erhalten werden, die aus Dicarbonsäuren oder esterbildenden Derivaten davon, Diolen oder esterbildenden Derivaten davon sowie Oxycarbonsäuren oder esterbildenden Derivaten davon ausgewählt ist. Diese phosphorhaltigen Flammschutzmittel werden dann mit Dicarbonsäuren wie Terephthalsäure und einem Glykol zu flammfesten Polyestern umgesetzt.

Aus der DE 28 16 100 C2 sind flammhemmende Mittel bekannt, die durch Polykondensation des Additionsprodukts von DOPO oder DOPO-Derivaten an Itaconsäure mit mehrwertigen Alkoholen erhalten wurden und ein Molekulargewicht von 1.000 bis 20.000 g/mol sowie einen Phosphorgehalt von 5,3 bis 8,5 Gew.-% aufweisen.

Der Erfindung liegt die Aufgabe zugrunde, halogenfreie Flammschutzmittel bereitzustellen, die nicht toxisch sind und sich zusammen mit thermoplastischen Formmassen in Schmelzspinnverfahren oder anderen Extrusionsverfahren bei erhöhten Temperaturen gut verarbeiten lassen.

Diese Aufgabe wird erfindungsgemäß durch ein halogenfreies Flammschutzmittel gelöst, das durch Polykondensation von phosphorhaltigen Monomeren mit esterbildenden Monomeren unter Bildung eines phosphorhaltigen Polyesters erhältlich ist, wobei das phosphorhaltige Monomer ausgewählt ist aus den Additionsprodukten von 9,10-Dihydro-9-oxa-10-phospha-phenanthren-10-oxid (DOPO) und kernsubstituierten DOPO-Derivaten an ungesättigte Verbindungen aus der Gruppe der ein- und mehrwertigen Carbonsäuren und deren Anhydride, und das esterbildende Monomer aus der aus den ein- und mehrwertigen Alkoholen und deren Mischungen sowie ein- und mehrwertigen Carbonsäuren bestehenden Gruppe ausgewählt ist. Das erfindungsgemäße Flammschutzmittel ist dadurch gekennzeichnet, daß der Polyester ein mittleres Molekulargewicht Mₙ von über 20.000 g/mol bei einem mittleren Polymerisationsgrad Pₙ von wenigstens 55 aufweist.

Es hat sich überraschenderweise gezeigt, daß man durch Zusatz des erfindungsgemäßen phosphorhaltigen Polyesters zu Formmassen auf der Grundlage von Polyamiden wie zum Beispiel PA 6, PA 12 und PA 66 für die Herstellung flammhemmender Polyamidfasern im Schmelzspinnverfahren geeignete Polymerzusammensetzungen erhält. Auch mit Polymerzusammensetzungen auf der Grundlage von Polyestern wie Polyethylenterephthalat (PET) konnten gute Ergebnisse erzielt werden. Die erfindungsgemäßen Flammschutzmittel zeichnen sich durch eine hohe Stabilität und gute Löslichkeit in thermoplastischen Grundpolymeren aus und können daher durch einfaches physikalisches Vermischen unter Bedingungen, wie sie beim Schmelzspinnen, Extrudieren oder Spritzgießen üblich sind, homogen im Grundpolymer verteilt werden. Des weiteren zeigen die erfindungsgemäßen Flammschutzmittel aufgrund des hohen Molekulargewichts nur eine äußerst geringe Neigung zum Herauswandern aus dem Grundpolymer und bewirken somit eine permanente Flammhemmung. Gleichzeitig werden die physikalischen Eigenschaften des flammhemmenden Grundpolymers durch die erfindungsgemäßen Flammschutzmittel nicht negativ beeinflußt, so daß eine sichere Verarbeitung während des Schmelzspinnverfahrens oder der nachfolgenden Verfahrensschritte wie Verstreckung, Texturierung und Färbung gewährleistet ist.

Der als Flammschutzmittel eingesetzte phosphorhaltige Polyester gemäß der Erfindung weist vorzugsweise eine dynamische Viskosität bei 120 °C von wenigstens 200 Pas, vorzugsweise zwischen 750 und 1250 Pas, auf. In diesem Viskositätsbereich ist eine optimale Verarbeitbarkeit des Polyesters im Schmelzspinnverfahren und anderen Extrusionsverfahren bei erhöhter Temperatur gegeben. Die gewünschte Viskosität kann durch eine sorgfältige Kontrolle des mittleren Molekulargewichts Mₙ, des mittleren Polymerisationsgrades Pₙ und/oder des Vernetzungsgrades des Polyesters eingestellt werden.

Des weiteren hat der erfindungsgemäße phosphorhaltige Polyester vorzugsweise einen Erweichungspunkt von zwischen 100 und 130 °C. Derartige Polyester lassen sich gut auf die Verwendung mit Polyamiden abstimmen, die ähnliche physikalische Eigenschaften aufweisen.

Das zur Herstellung des erfindungsgemäßen Flammschutzmittels verwendete phosphorhaltige Monomer ist ein Addukt von DOPO oder einem kernsubstituierten DOPO-Derivat an eine ungesättigte, ein- oder mehrwertige Carbonsäure oder deren Anhydrid und umfaßt bevorzugt eine Verbindung der folgenden Formel (I): 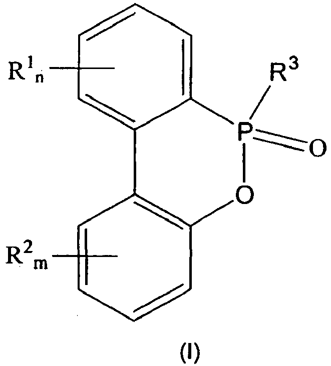 worin R¹ und R² gleich oder verschieden sind und jeweils unabhängig voneinander Alkyl, Alkoxy, Aryl, Aryloxy oder Aralkyl bedeuten, n und m ganze Zahlen von 0 bis 4 sind und R³ einen Rest darstellt, der von einer ungesättigten Dicarbonsäure oder deren Anhydrid abgeleitet ist. Bevorzugt sind R¹ und R² jeweils C₁₋₈-Alkyl oder C₁₋₈-Alkoxy, n und m sind 0 oder 1.

Bevorzugte ungesättigte Mono- oder Dicarbonsäuren zur Umsetzung mit DOPO sind Sorbinsäure, Acrylsäure und Crotonsäure sowie Itaconsäure, Maleinsäure, Fumarsäure, Endomethylentetrahydrophthalsäure, Citraconsäure, Mesaconsäure und Tetrahydrophthalsäure sowie deren Anhydride. Ganz besonders bevorzugt sind Itaconsäure, Maleinsäure und deren Anhydride.

Das zur Herstellung des erfindungsgemäßen Polyester-Flammschutzmittels eingesetzte esterbildende Monomer ist bevorzugt aus der Gruppe der gesättigten ein- und mehrwertigen Alkohole ausgewählt. Besonders bevorzugte esterbildende Monomere sind aliphatische Diole wie Monoethylenglykol, Diethylenglykol, Propylenglykol, 1,3-Propandiol, 1,3-Butandiol, 1,4-Butandiol, Neopentylglykol, Hexandiol und 1,10-Decandiol. Bevorzugte mehrwertige Alkohole sind Tris-2-hydroxyethylisocyanurat (THEIC), Glycerin, Trimethylolethan, Trimethylolpropan und Pentaerythrit, sowie Zuckeralkohole wie Mannit.

Zur Verbesserung der Verträglichkeit mit den thermoplastischen Polymeren kann der erfindungsgemäße Polyester durch Umsetzung mit einem einwertigen Alkohol oder einer wahlweise phosphorhaltigen Monocarbonsäure endverschlossen sein.

Der Phosphorgehalt des erfindungsgemäßen Flammschutzmittels läßt sich nahezu stufenlos einstellen und beträgt vorzugsweise zwischen etwa 5 und 8,5 Gew.-%, besonders bevorzugt zwischen etwa 7,5 und 8,5 Gew.-%.

Das mittlere Molekulargewicht Mₙ des phosphorhaltigen Polyesters gemäß der Erfindung ist vorzugsweise größer als etwa 25.000 g/mol und liegt bevorzugt zwischen etwa 25.000 und 100.000 g/mol, insbesondere zwischen etwa 25.000 und 35.000 g/mol. Der mittlere Polymerisationsgrad des Polyesters beträgt wenigstens 50 und liegt vorzugsweise zwischen 60 und 250, insbesondere zwischen 60 und 90. Die im Vergleich zum Stand der Technik hochmolekularen Polyester sind in der Polymerschmelze äußerst stabil, da Umesterungsreaktionen weitgehend unterdrückt werden.

Eine besonders bevorzugte Ausführungsform des erfindungsgemäßen Flammschutzmittels enthält Polyesterketten der folgenden Formel (II): 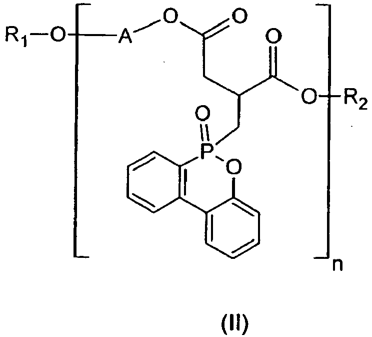 worin R¹ Wasserstoff, Methyl oder Ethyl bedeutet, R² einen Rest -(CH₂)ₘ-O-R¹ bedeutet, A eine verzweigte oder unverzweigte Alkylengruppe mit 2 bis 6 Kohlenstoffatomen oder eine wahlweise substituierte aromatische Brückengruppe ist und n eine ganze Zahl zwischen 55 und 110 ist. Die Substituenten an der aromatischen Brückengruppe sind bevorzugt Akyl, Alkoxy, Aryl, Aryloxy, Aralkyl und Alkylaryl.

Bei dem erfindungsgemäßen Flammschutzmittel der Formel (II) handelt es sich vorzugsweise um einen Polyester mit Phosphorgehalten zwischen 7,5 Gew.-% und 8,5 Gew.-%. Der Polyester ist durch Polykondensation von Verbindungen der folgenden Formel (III): 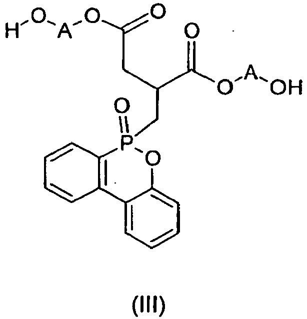 leicht zugänglich. In der obigen Formel (III) hat A die oben angegebene Bedeutung.

Ganz besonders bevorzugt bedeutet in der obigen Formel (II) R¹ = H, R² = CH₂CH₂OH und A = CH₂CH₂. In diesem Fall handelt es sich um einen Polyester mit einem Phosphorgehalt von 7.9 - 8.4 Gew.-%, einem mittleren Molekulargewicht Mₙ von 25.000 - 100.000 g/mol (aus Endgruppenbestimmung) bei einen mittleren Polymerisationsgrad Pn zwischen 55 und 250 und Erweichungspunkten zwischen 100 °C und 130°C. Die dynamische Viskosität des Polyesters bei 120°C liegt zwischen 700 und 1300 Pa.s.

Neben den gegenüber den Standardbedingungen für die Polyesterherstellung notwendigen erhöhten Temperaturen und verlängerten Polykondensationszeiten können für die Herstellung der erfindungsgemäßen Polyester auch die dem Fachmann bekannten Additive zur Kettenverlängerung und Kettenvernetzung, wahlweise in Kombination mit Hitzestabilisatoren und/oder monofunktionalen Alkoholen oder Carbonsäuren zum Kettenendverschluß, eingesetzt werden. Zur Verbesserung der Farbe des erfindungsgemäßen Flammschutzmittels können ferner bekannte optische Aufheller verwendet werden. Die Polyesterketten des erfindungsgemäßen Flammschutzmittels sind vorzugsweise teilvernetzt, d. h., ein Teil der Polyesterketten ist durch Co-Kondensation in Gegenwart eines mehrwertigen Alkohols miteinander verbunden.

Die oben beschriebenen Flammschutzmittel werden erfindungsgemäß für die Herstellung flammhemmend ausgerüsteter Polymerfasern aus der Gruppe der Polyamidfasern oder Polyesterfasern im Schmelzspinnverfahren verwendet. Hierfür werden die Flammschutzmittel physikalisch mit dem entsprechenden Polyamid oder Polyester in der Schmelze vermischt und dann entweder als Polymermischung mit Phosphorgehalten zwischen 0,1 Gew.-% und 2 Gew.-% direkt zu Fäden versponnen oder im Sinne eines Masterbatches mit Phosphorgehalten zwischen 2 Gew.-% und 5 Gew.-% zunächst fertig konfektioniert und dann in einem zweiten Verfahrensschritt zusammen mit demselben oder mit einem anderen Polyamid- oder Polyestertyp zu Fäden versponnen.

Aufgrund der herausragenden chemischen Stabilität der erfindungsgemäßen Flammschutzmittel können diese auch in anderen thermoplastischen Formmassen wie sogenannten "engineering polymers" eingesetzt werden, die üblicherweise durch Extrusions- oder Spritzgußverfahren bei erhöhter Temperatur verarbeitet werden.

Ein weiterer Aspekt der Erfindung betrifft daher eine thermoplastische Polymerzusammensetzung mit einem thermoplastischen Polymer aus der Gruppe der Polyester, Polyimide, Polysulfone, Polyolefine wie Polyethylen und Polypropylen, Polyacrylate, Polyetheretherketone, ABS, Polyurethane, Polystyrole, Polycarbonate, Polyphenylenoxide, ungesättigte Polyesterharze, Phenolharze und Polyamide, sowie einem halogenfreien Flammschutzmittel gemäß der vorliegenden Erfindung, wobei der Gesamtphosphorgehalt der Polymerzusammensetzung zwischen etwa 0,1 und 5 Gew.-% beträgt.

Das thermoplastische Polymer ist vorzugsweise ein schmelzspinnfähiges Polyamid, insbesondere ein aus der aus PA 6, PA 66 und PA 12 bestehenden Gruppe ausgewähltes Polyamid.

Ferner kann als thermoplastisches Polymer ein schmelzspinnfähiger Polyester wie Polyethylenterephthalat verwendet werden.

Des weiteren betrifft die Erfindung ein Verfahren zur Herstellung von Polyamidfasern, bei dem eine Polymerzusammensetzung aufgeschmolzen und zu Filamenten extrudiert wird, wobei die Polymerzusammensetzung ein schmelzspinnfähiges Polyamid und das erfindungsgemäße Flammschutzmittel enthält. Die Polymerzusammensetzung kann als Masterbatch mit einem Phosphorgehalt von 2 bis 5 Gew.-% zu einer schmelzspinnfähigen Polyamidformmasse zugesetzt werden, wobei das Polyamid der Polymerzusammensetzung und das Polyamid der Polyamidformmasse gleich oder verschieden sein können. In gleicher Weise lassen sich Polyesterfasen aus einer Polymerzusammensetzung mit einem schmelzspinnfähigen Polyester und dem erfindungsgemäßen Flammschutzmittel, auch im Maserbatchverfahren, herstellen.

Die im Schmelzspinnverfahren hergestellten Polymerfasern weisen bevorzugt einen Gesamtphosphorgehalt von 0,1-2 Gew.-%, insbesondere von 0,5 - 1 Gew.-% auf und sind damit hinreichend flammgeschützt.

Alle vorgenannten Polyamide und Polyester lassen sich durch einfaches physikalisches Vermischen der Polymerschmelzen, unter Bedingungen, wie sie beim Schmelzspinnen üblich sind, hervorragend mit den obengenannten Flammschutzmitteln flammhemmen. Bei Verwendung der erfindungsgemäßen phosphorhaltigen Polyester als nicht-reaktive Flammschutzmittel werden wichtige Polymereigenschaften wie Schmelzviskosität, Schmelzpunkt, Schmelze-Volumenfließrate etc. der nach der Vermischung entstehenden Polymerzusammensetzung nur so weit verändert, daß eine sichere Verarbeitung wie ein Schmelzspinnen vollständig gewährleistet bleibt.

Die Erfindung betrifft somit auch die Verwendung eines halogenfreien Flammschutzmittels gemäß der Erfindung bei der Herstellung thermoplastischer Formmassen, wobei die Formmassen bei Temperaturen oberhalb 120 °C zu flammgeschützten Formkörpern verarbeitbar sind. Insbesondere sieht die erfindungsgemäße Verwendung vor, daß die Formkörper im Schmelzspinnverfahren hergestellte flammhemmende Polyamidfasern und flammhemmende Polyesterfasern sind.

Für besondere Anwendungsfälle können auch andere bekannte Flammschutzmittel, im Sinne von Synergisten, in Kombination mit dem erfindungsgemäßen Flammschutzmittel eingesetzt werden, wie beispielsweise Melamincyanurat, Melaminpolyphospat, Ammoniumpolyphosphat und Metallstannate, hier insbesondere Zinkstannat. Durch den Einsatz dieser Synergisten können für die flammhemmenden Eigenschaften wichtige Parameter, wie beispielsweise die Cone-calorimetrischen Kennzahlen TTI (time to ignition) vergrößert, PHRR (peak of heat release rate) abgesenkt und/oder eine wünschenswerte Unterdrückung der Rauchgasentwicklung verbessert werden. Beispiele für weitere Synergisten sind Metallborate wie Zinkborat, polyhedrale oligomere Silsesquioxane (z.B. Handelsname POSS^{®} der Firma Hybrid Plastics) und die auf den exfolierten Schichtsilikaten Montmorillonit und Bentonit basierenden sogenannten Nanoclays, wie beispielsweise die Produkte Nanomer^{®} der Firma Nanocor oder Nanofil^{®} der Firma Südchemie, sowie anorganische Metallhydroxide, wie beispielsweise die Produkte Magnifin^{®} oder Martinal^{®} der Firma Martinswerk. Die Synergisten liegen in der Polymerzusammensetzung vorzugsweise in einem Anteil von 0.5 bis zu 50 Gew.-%, bezogen auf das Gewicht des erfindungsgemäßen Flammschutzmittels, vor.

Weitere Vorteile der Erfindung ergeben sich aus der nachfolgenden Beschreibung bevorzugter Ausführungsbeispiele, die jedoch nicht in einem einschränkenden Sinne verstanden werden sollen.

### Herstellung eines erfindungsgemäßen phosphorhaltigen Polyesters

### Beispiel 1:

346,3 g (1 mol) zweifach aus Propionsäure umkristallisierte 2-[(6-oxido-6*H-*dibenzo[*c,e*][1,2]oxaphosphinin-6-yl)methyl]succinsäure der nachfolgenden Formel: 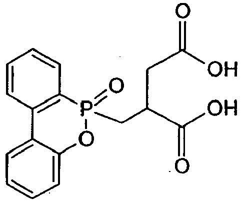 werden zusammen mit 186,21 g (3 mol) Monoethylenglykol (MEG) in einem mit KPG-Rührer, 20 cm Vigreuxkolonne und Destillationsbrücke sowie einem Innenthermometer bestückten ein Liter Dreihalskolben während zwei Stunden am Rückfluß erhitzt und das dabei gebildete Reaktionswasser kontinuierlich abdestilliert. Im Anschluß wird die Kolonne entfernt und der Druck auf 20 mbar vermindert, um überschüssiges MEG abzudestillieren. Nach Belüften mit N₂ werden 30 mg in 10 ml MEG gelöstes GeO₂ und 380 mg Trimethylolpropan während 15 Minuten eingerührt und anschließend der Druck auf 0.5 mbar abgesenkt, wobei die Temperatur auf 260°C erhöht wird. Anschließend wird während 240 Minuten bei diesen Bedingungen gerührt. Nach dem Erkalten erhält man ein schwach gelbliches glasartiges Polymer, das Polyesterketten der folgenden Formel enthält: 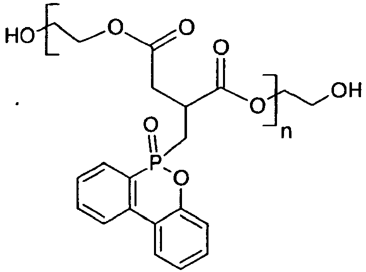 worin n die Molfraktion der Polyestergrundeinheit bedeutet und die Polyesterketten einen mittleren Polymerisationsgrad Pₙ von etwa 80 aufweisen. Das so erhaltene Polymer zeigt folgende analytische Daten:

| | |
|---|---|
| Mittlere Molare Masse (Endgruppenbestimmung) Mₙ | 28.500 |
| Phosphorgehalt [%] | 8.2 |
| COOH-Endgruppen | 40 µval/g |
| OH-Endgruppen | 30 µval/g |
| Erweichungspunkt (Cup and Ball) | 123°C |
| Glasumwandlungspunkt (DSC) | 74°C |
| Dynamische Viskosität bei 120°C, 5sec⁻¹ (Plate - Cone) | 800 Pas |

### Herstellung von flammhemmend ausgerüsteten Polyamidfasern

### Beispiel 2-1:

Der in Beispiel 1 hergestellte phosphorhaltige Polyester wird in einer Kugelmühle vermahlen und das Pulver anschließend im Trockenschrank bei 55°C während 24 Stunden bis auf einen Wasseranteil von 25 ppm getrocknet. Das farblose Pulver wird dann zusammen mit Polyamid 6 Chips mit einer relativen Viskosität von 2,7 (gemessen bei 25°C als 1% Lösung in H₂SO₄) vermischt und dann im Verhältnis von 5:95 Massenanteilen (Polyester: PA 6) nach den für PA 6 üblichen Parametern extrudiert und zu Filamenten ausgesponnen.

### Beispiel 2-2:

Wie in Beispiel 2-1 beschrieben wird der erfindungsgemäße Polyester zusammen mit Polyamid 6 Chips mit einer relativen Viskosität von 2,7 (gemessen bei 25°C als 1 % Lösung in H₂SO₄) im Verhältnis von 10:90 Massenanteilen auf einer Polyamid-Filament-Anlage nach den für PA 6 üblichen Parametern extrudiert und zu Filamenten ausgesponnen.

### Prüfung textilmechanischer Eigenschaften

### Beispiel 3:

Die gemäß den Beispielen 2-1 und 2-2 hergestellten Filamentgarne (Spule 1 und Spule 2) werden nach bekannten Verfahren verstreckt und die textilmechanischen Eigenschaften untersucht. Zum Vergleich wird aus den oben genannten Polyamid 6 Chips unter den gleichen Bedingungen ein reines Filamentgarn (Spule 0) ohne Flammschutzmittel hergestellt und ebenfalls verstreckt. Die aus der textilmechanischen Untersuchung im KraftDehnungsdiagramm erhaltenen Ergebnisse sind nachfolgend angegeben.

| unverstreckt | | | | |
|---|---|---|---|---|
| Spule | Dehnung [%] | Feinheit [dtex] | Kraft [cN/tex] | Modul [cN/tex] |
| 0 | 292,3 | 220 | 16,58 | 50,21 |
| 1 | 284,6 | 220 | 15,96 | 51,55 |
| 2 | 272,4 | 218 | 14,65 | 64,96 |
| | | | | |

| verstreckt | | | | |
|---|---|---|---|---|
| Spule | Dehnung [%] | Feinheit [dtex] | Kraft [cN/tex] | Modul [cN/tex] |
| 0 | 25,1 | 72 | 50,26 | 372,89 |
| 1 | 24,3 | 71,8 | 50,14 | 374,65 |
| 2 | 15,87 | 72 | 49,3 | 403,53 |

### Flammschutzprüfung

### Beispiel 4:

Die verstreckten Filamentgarne aus Beispiel 3 werden jeweils zu Strümpfen verstrickt. Der Limiting Oxygen Index (LOI) wird jeweils an den beiden flammhemmenden Strickstrümpfen und zum Vergleich an dem unausgerüsteten Polyamid 6 Strickstrumpf (Spule 0) gemessen. Der LOI gibt an, bis zu welchem Sauerstoffgehalt in der umgebenden Atmosphäre eine Verbrennung der untersuchten Probe unterhalten wird. Ein LOI von 20,9 % bedeutet beispielsweise, daß eine Probe bei Normalatmosphäre gerade noch brennt, bei niedrigerem O₂-Anteil jedoch erlischt. Die LOI-Prüfung ergibt folgende Ergebnisse:

| Spule | Anteil Flamm-schutzmittel [Gew.-%] | Phosphorgehalt [%] | LOI [%O₂] |
|---|---|---|---|
| 0 | 0 | 0 | 23.5 |
| 1 | 5 | 0,4 | 34.5 |
| 2 | 10 | 0,8 | 38.5 |

### Polyester gemäß DE 28 16 100

### Vergleichsbeispiel 5:

346,3 g (1 mol) zweifach aus Propionsäure umkristallisierte 2-[(6-oxido-6*H-*dibenzo[c,e][1,2]oxaphosphinin-6-yl)methyl]succinsäure werden zusammen mit 186,21 g (3 mol) Monoethylenglykol (MEG) in einem mit KPG-Rührer, 20 cm Vigreuxkolonne und Destillationsbrücke sowie einem Innenthermometer bestückten ein Liter Dreihalskolben während zwei Stunden am Rückfluß erhitzt und das dabei gebildete Reaktionswasser kontinuierlich abdestilliert. Im Anschluß wird die Kolonne entfernt und der Druck auf 20 mbar vermindert, um überschüssiges MEG abzudestillieren. Nach Belüften mit N₂ werden 30 mg in 10 ml MEG gelöstes GeO₂ während 15 Minuten eingerührt und anschließend der Druck auf 0.5 mbar abgesenkt wobei die Temperatur auf 250°C erhöht wird. Anschließend wird während 90 Minuten bei diesen Bedingungen gerührt. Nach dem Erkalten erhält man ein schwach gelbliches glasartiges Polymer mit folgenden analytischen Daten:

| | |
|---|---|
| Mittlere Molare Masse (Endgruppenbestimmung) Mₙ | 5000 |
| Phosphorgehalt [%] | 8.0 |
| COOH-Endgruppen | 78 µval/g |
| OH-Endgruppen | 321 µval/g |
| Erweichungspunkt (Cup and Ball) | 62°C |
| Glasumwandlungspunkt (DSC) | 57°C |
| Dynamische Viskosität bei 120°C, 5sec⁻¹ (Plate - Cone) | 25 Pas |

### Herstellung von Polyamidfasern

### Vergleichsbeispiel 6:

Der Polyester aus Vergleichsbeispiel 5 wird gemäß Beispiel 2-1 behandelt und zusammen mit Polyamid 6 Chips mit einer relativen Viskosität von 2,7 (gemessen bei 25°C als 1 % Lösung in H₂SO₄) im Verhältnis von 10:90 Massenanteilen (Polyester : Polyamid) auf einer Polyamid-Filament-Anlage nach den für PA 6 üblichen Parametern extrudiert. Eine sichere Verspinnbarkeit zu Filamenten ist aufgrund der stark erhöhten Anzahl von Fadenbrüchen nicht gegeben. Die LOI-Prüfung des aus diesem Filament hergestellten Strickstrumpfes ergibt folgende Ergebnisse:

| Spule | Anteil Flamm-schutzmittel [Gew.-%] | Phosphorgehalt [%] | LOI [%O₂] |
|---|---|---|---|
| 1 | 10 | 0,8 | 28.1 |

### Vergleichbeispiel 7:

Die freie [2-[(6-oxido-6*H*-dibenzo[*c,e*][1,2]oxaphosphinin-6-yl)methyl]succinsäure wird zusammen mit Polyamid 6 Chips mit einer relativen Viskosität von 2,7, (gemessen bei 25°C als 1 % Lösung in H₂SO₄) im Verhältnis 10:90 Massenanteilen auf einer Polyamid-Filament-Anlage nach den für PA 6 üblichen Parametern extrudiert. Das resultierende Polymer ist deutlich gelblich verfärbt und sehr spröde, wodurch eine sichere Verspinnbarkeit zu Filamenten aufgrund der stark erhöhten Anzahl von Fadenbrüchen nicht gegeben ist.

### Flammgeschützte Polyamidfasern aus Masterbatch

### Beispiel 8:

Das nach Beispiel 1 hergestellte und in einer Kugelmühle zu Pulver vermahlene und anschließend getrocknete Flammschutzmittel wird zusammen mit Polyamid 6 Chips mit einer relativen Viskosität von 2,7, gemessen bei 25°C als 1 % Lösung in H₂SO₄, im Verhältnis von 25:75 Massenanteilen auf einem Doppelschneckenextruder als Strang extrudiert und anschließend zu Chips mit einem Phosphorgehalt von 2% granuliert. Nach erneuter Trocknung dieser Chips auf einen Wasseranteil <25 ppm werden diese im Verhältnis 20:80 und 40:60 Massenanteilen zusammen mit Polyamid 6 Chips, mit einer relativen Viskosität von 2,7 (gemessen bei 25°C als 1% Lösung in H₂SO₄) unter den oben genannten Bedingungen versponnen. Die Verarbeitung gelingt problemlos und nach dem Verstrecken der Polyamidfasern werden die nachstehenden textilmechanischen Werte erhalten. Aus den Filamentgarnen werden wie in Beispiel 4 beschrieben Strickstrümpfe hergestellt und LOI-Messungen durchgeführt, die ebenfalls in der folgenden Tabelle angegeben sind:

| Spule | Dehnung [%] | Feinheit [dtex] | Kraft [cN/tex] | Modul [cN/tex] | Phosphorgehalt [%] | LOI [%O₂] |
|---|---|---|---|---|---|---|
| 1 | 23,35 | 72 | 49,25 | 376,37 | 0,4 | 35,5 |
| 2 | 16,28 | 72 | 49,0 | 398,48 | 0,8 | 38,5 |

### Herstellung eines weiteren phosphorhaltigen Polyesters

### Beispiel 9:

346,3 g (1 mol) zweifach aus Propionsäure umkristallisierte [2-[(6-oxido-6*H-*dibenzo[*c,e*][1,2]oxaphosphinin-6-yl)methyl]succinsäure] werden zusammen mit 228,87 g (3 mol) 1,3-Propandiol in einem mit KPG-Rührer, 20 cm Vigreuxkolonne und Destillationsbrücke sowie einem Innenthermometer bestückten ein Liter Dreihalskolben während zwei Stunden am Rückfluß erhitzt und das dabei gebildete Reaktionswasser kontinuierlich abdestilliert. Im Anschluß wird die Kolonne entfernt und der Druck auf 20 mbar vermindert, um überschüssiges 1,3-Propandiol abzudestillieren. Nach Belüften mit N₂ werden 80 mg in 10 ml 1,3-Propandiol gelöstes Titantetrabutylat und 380 mg Trimethylolpropan während 15 Minuten eingerührt, anschließend der Druck auf 0.5 mbar abgesenkt und die Temperatur auf 250°C erhöht. Es wird während 240 Minuten bei diesen Bedingungen gerührt. Nach dem Erkalten erhält man ein schwach gelbliches glasartiges Polymer mit Polyesterketten der Formel: 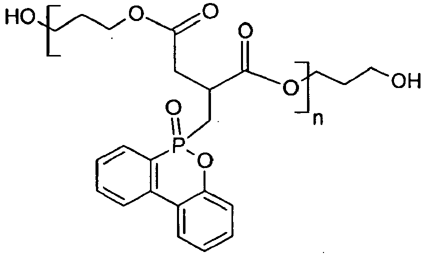 das einen mittleren Polymerisationsgrad Pₙ von etwa 71 aufweist und folgende analytische Daten zeigt:

| | |
|---|---|
| Mittlere Molare Masse (Endgruppenbestimmung) Mₙ | 27500 |
| Phosphorgehalt [%] | 7.7 |
| COOH-Endgruppen | 41 µval/g |
| OH-Endgruppen | 32 µval/g |
| Erweichungspunkt (Cup and Ball) | 115°C |
| Glasumwandlungspunkt (DSC) | 72°C |
| Dynamische Viskosität bei 120°C, 5sec⁻¹ (Plate - Cone) | 790 Pas |

### Textiltechnische Prüfung und Flammschutzprüfung

### Beispiel 10:

Der gemäß Beispiel 9 hergestellte Polyester wird gemäß Beispiel 2-1 behandelt und zusammen mit Polyamid 6 Chips mit einer relativen Viskosität von 2,7, (gemessen bei 25°C als 1% Lösung in H₂SO₄) vermischt und dann im Verhältnis von 5:95 und 10:90 Massenanteilen (Polyester : Polyamid) auf einer Polyamid-Filament-Anlage zu flammgeschützten Polyamidfasern versponnen.

Nach dem Verstrecken der Polyamidfasern resultieren die in der folgenden Tabelle angegebenen textilmechanischen Werte. Aus den Filamentgarnen werden wie in Beispiel 4 beschrieben Strickstrümpfe hergestellt und LOI-Messungen durchgeführt. Dabei werden die ebenfalls angegebenen Werte erhalten.

| Spule | Dehnung [%] | Feinheit [dtex] | Kraft [cN/tex] | Modul [cN/tex] | Phosphorgehalt [%] | LOI [%O₂] |
|---|---|---|---|---|---|---|
| 1 | 25,27 | 72 | 50,26 | 368,20 | 0,4 | 34,5 |
| 2 | 17,33 | 72 | 49,67 | 395,09 | 0,8 | 39,5 |

### Herstellung von flammhemmend ausgerüsteten Polyethylenterephthalat-Filamentgarnen

### Beispiel 11:

Der in Beispiel 1 hergestellte phosphorhaltige Polyester wird in einer Kugelmühle vermahlen und das Pulver anschließend im Trockenschrank bei 55°C während 24 Stunden bis auf einen Wasseranteil von 25 ppm getrocknet. Das farblose Pulver wird dann zusammen mit PET Granulat (Handelsname RT51 der Firma Invista Resins&Fibers) mit einer intrinsischen Viskosität von 0,63 (gemessen bei 25°C als 1%ige Lösung in Dichloressigsäure) vermischt und dann im Verhältnis von 7,5:92,5 Massenanteilen (P-haltiger Polyester: PET) nach den für PET üblichen Parametern extrudiert und zu Filamenten ausgesponnen.

### Prüfung textilmechanischer Eigenschaften

### Beispiel 12:

Die gemäß den Beispielen 11 hergestellten Filamentgarne (Spule 1) werden nach bekannten Verfahren verstreckt und die textilmechanischen Eigenschaften untersucht. Zum Vergleich wird aus dem oben genannten PET Granulat unter den gleichen Bedingungen ein reines Filamentgarn (Spule 0) ohne Flammschutzmittel hergestellt und ebenfalls verstreckt. Die aus der textilmechanischen Untersuchung im Kraft-Dehnungsdiagramm erhaltenen Ergebnisse sind nachfolgend angegeben.

| unverstreckt | | | | |
|---|---|---|---|---|
| Spule | Dehnung [%] | Feinheit [dtex] | Kraft [cN/tex] | Modul [cN/tex] |
| 0 | 94,38 | 98,4 | 22,92 | 314,92 |
| 1 | 110,72 | 92 | 20,49 | 250,76 |
| | | | | |

| verstreckt | | | | |
|---|---|---|---|---|
| Spule | Dehnung [%] | Feinheit [dtex] | Kraft [cN/tex] | Modul [cN/tex] |
| 0 | 25,57 | 33,55 | 60 | 710,88 |
| 1 | 32,65 | 59,5 | 31,85 | 733,22 |

### Flammschutzprüfung

### Beispiel 13:

Die verstreckten Filamentgarne aus Beispiel 12 werden jeweils dreimal gefacht und zu Strümpfen verstrickt. Der Limiting Oxygen Index (LOI) wird sowohl am flammhemmenden Strickstrumpf, als auch zum Vergleich an dem nicht flammhemmend ausgerüsteten PET Strickstrumpf (Spule 0) gemessen. Die Messung des LOI ergibt folgende Werte:

| Spule | Anteil Flammschutzmittel [Gew.-%] | Phosphorgehalt [%] | LOI [%O₂] |
|---|---|---|---|
| 0 | 0 | 0 | 23.5 |
| 1 | 7,5 | 0,6 | 30.5 |

### Polyesterfilamente mit Flammschutzmittel, hergestellt gemäß DE 28 16 100

### Vergleichsbeispiel 14:

Der phosphorhaltige Polyester aus Vergleichsbeispiel 5 wird gemäß Beispiel 11 behandelt und zusammen mit PET Granulat (Handelsname RT51 der Firma Invista Resins&Fibers) mit einer relativen Viskosität von 0,63 (gemessen bei 25°C als 1%ige Lösung in Dichloressigsäure) im Verhältnis von 7,5:92,5 Massenanteilen (Flammschutzmittel : PET) auf einer Polyester-Filament-Anlage nach den für PET üblichen Parametern extrudiert. Aufgrund der stark erhöhten Anzahl von Fadenbrüchen der resultierenden sehr spröden Filamente, gelingt eine sichere Verspinnung unter Erhalt von Filamentgarnrollen nicht.

## Patentansprüche

1. Halogenfreies Flammschutzmittel, erhältlich durch Polykondensation von phosphorhaltigen Monomeren mit esterbildenden Monomeren unter Bildung eines phosphorhaltigen Polyesters, wobei das phosphorhaltige Monomer ausgewählt ist aus den Additionsprodukten von 9,10-Dihydro-9-oxa-10-phosphaphenanthren-10-oxid (DOPO) und kernsubstituierten DOPO-Derivaten an ungesättigte Verbindungen aus der Gruppe der ein- und mehrwertigen Carbonsäuren und deren Anhydride, und das esterbildende Monomer aus der aus den ein- und mehrwertigen Alkoholen oder Mischungen davon und ein- und mehrwertigen Carbonsäuren bestehenden Gruppe ausgewählt ist, **dadurch gekennzeichnet, daß** der Polyester ein mittleres Molekulargewicht Mn von über 20.000 bei einem mittleren Polymerisationsgrad Pn von wenigstens 55 aufweist.

2. Flammschutzmittel nach Anspruch 1, **dadurch gekennzeichnet, daß** die dynamische Viskosität des Polyesters bei 120 °C wenigstens 200 Pas, vorzugsweise zwischen 750 und 1250 Pas beträgt.

3. Flammschutzmittel nach Anspruch 1 oder 2, **dadurch gekennzeichnet, daß** der Polyester einen Erweichungspunkt von zwischen 100 und 130 °C aufweist.

4. Flammschutzmittel nach einem der vorhergehenden Ansprüche, **dadurch gekennzeichnet, daß** das phosphorhaltige Monomer eine Verbindung der folgenden Formel (I) umfaßt: 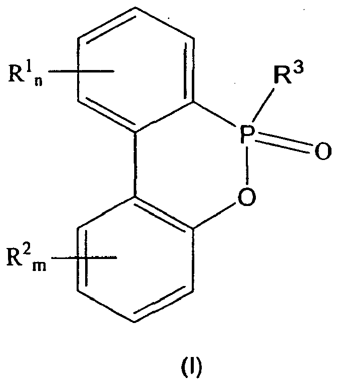 worin R¹ und R² gleich oder verschieden sind und jeweils unabhängig voneinander Alkyl, Alkoxy, Aryl, Aryloxy oder Aralkyl bedeuten, n und m ganze Zahlen von 0 bis 4 sind und R³ einen von einer ungesättigten Dicarbonsäure oder deren Anhydrid abgeleiteten Rest darstellt.

5. Flammschutzmittel nach einem der vorhergehenden Ansprüche, **dadurch gekennzeichnet, daß** der Polyester durch Umsetzung mit einem einwertigen Alkohol oder einer Monocarbonsäure endverschlossen ist.

6. Flammschutzmittel nach einem der vorhergehenden Ansprüche, **dadurch gekennzeichnet, daß** der Phosphorgehalt des Polyesters zwischen etwa 5 und 8,5 Gew.-% beträgt.

7. Flammschutzmittel nach einem der vorhergehenden Ansprüche, **dadurch gekennzeichnet, daß** das mittlere Molekulargewicht Mn größer als etwa 25.000 ist.

8. Flammschutzmittel nach einem der vorhergehenden Ansprüche, **dadurch gekennzeichnet, daß** das mittlere Molekulargewicht Mn zwischen etwa 25.000 und 100.000 g/mol, vorzugsweise bis etwa 35.000 g/mol beträgt.

9. Thermoplastische Polymerzusammensetzung mit einem thermoplastischen Polymer aus der Gruppe der Polyester, Polysulfone, Polyimide und Polyamide, Polyolefine, Polyacrylate, Polyetheretherketone, ABS, Polyurethane, Polystyrole, Polycarbönate, Polyphenylenoxide, ungesättigte Polyesterharze, Phenolharze, und einem halogenfreien Flammschutzmittel nach einem der vorhergehenden Ansprüche, wobei der Gesamtphosphorgehalt der Polymerzusammensetzung zwischen etwa 0,1 und 5 Gew.-% beträgt.

10. Polymerzusammensetzung nach Anspruch 9, **dadurch gekennzeichnet, daß** das thermoplastische Polymer ein schmelzspinnfähiges Polyamid ist.

11. Polymerzusammensetzung nach Anspruch 10, **dadurch gekennzeichnet, daß** das Polyamid aus der aus PA 6, PA 66 und PA 12 bestehenden Gruppe ausgewählt ist.

12. Polymerzusammensetzung nach Anspruch 9, **dadurch gekennzeichnet, daß** das thermoplastische Polymer ein schmelzspinnfähiger Polyester, insbesondere ein Polyethylentherephthalat ist.

13. Verfahren zur Herstellung von Polymerfasern, bei dem eine Polymerzusammensetzung erwärmt und zu Filamenten extrudiert wird, wobei die Polymerzusammensetzung ein schmelzspinnfähiges Polymer und ein Flammschutzmittel enthält wobei das Polymer aus der aus schmelzspinnfähigen Polyamiden und Polyestern bestehenden Gruppe ausgewählt ist, **dadurch gekennzeichnet, daß** als Flammschutzmittel ein phosphorhaltiger Polyester gemäß einem der vorhergehenden Ansprüche 1 bis 8 mit einem mittleren Molekulargewicht Mn von über 20.000 g/mol verwendet wird.

14. Verfahren nach Anspruch 13, **dadurch gekennzeichnet, daß** das Polymer ein Polyamid ist und die Polymerzusammensetzung als Masterbatch mit einem Phosphorgehalt von 2 bis 5 Gew.-% zu einer schmelzspinnfähigen Polyamidformmasse zugesetzt wird.

15. Verfahren nach Anspruch 14, **dadurch gekennzeichnet, daß** das Polyamid der Polymerzusammensetzung und das Polyamid der Polyamidformmasse gleich oder verschieden sind.

16. Verfahren nach Anspruch 13, **dadurch gekennzeichnet, daß** das Polymer ein Polyester ist und die Polymerzusammensetzung als Masterbatch mit einem Phosphorgehalt von 2 bis 5 Gew.-% zu einer schmelzspinnfähigen Polyesterformmasse zugesetzt wird.

17. Verfahren nach einem der Ansprüche 13 bis 16, **dadurch gekennzeichnet , daß** die Polymerfasern einen Gesamtphosphorgehalt von 0,1-2 Gew.-% aufweisen.

18. Verfahren nach Anspruch 17, **gekennzeichnet durch** einen Gesamtphosphorgehalt der Polymerfasern von 0,5 - 1 Gew.-%.

19. Verwendung eines halogenfreien Flammschutzmittels gemäß einem der Ansprüche 1 bis 8 bei der Herstellung thermoplastischer Formmassen, wobei die Formmassen bei Temperaturen oberhalb 120 °C zu Formkörpern verarbeitbar sind.

20. Verwendung nach Anspruch 19, **dadurch gekennzeichnet, daß** die Formkörper durch Schmelzspinnverfahren hergestellte Polyamidfasern oder Polyesterfasern sind.

## Claims

1. A halogen-free flame retardant obtainable by polycondensation of a phosphoric monomer with an esterifying monomer so as to form a phosphoric polyester, wherein the phosphoric monomer is selected from the addition reaction products of 9,10-dihydro-9-oxa-10-phospha-phenanthrene-10-oxide (DOPO) and ring-substituted DOPO derivatives to unsaturated compounds selected from the group of monovalent and polyvalent carboxylic acids and anhydrides thereof, and wherein the esterifying monomer is selected from the group consisting of monovalent and polyvalent alcohols and mixtures thereof, and monovalent and polyvalent carboxylic acids, **characterized in that** the polyester has an average molecular weight Mn of more than 20,000 and an average degree of polymerization Pn of at least 55.

2. The flame retardant according to claim 1, **characterized in that** the polyester has a dynamic viscosity at 120 °C of least 200 Pas, preferably between 750 and 1250 Pas.

3. The flame retardant according to claim 1 or 2, **characterized in that** the polyester has a softening point of between 100 and 130°C.

4. The flame retardant according to any of the preceding claims, **characterized in that** the phosphoric monomer comprises a compound of the following formula (I): 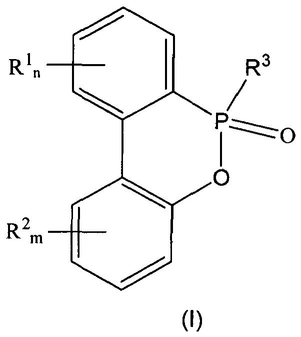 wherein R¹ and R² are identical or different and denote, each independently of each other, alkyl, alkoxy, aryl, aryloxy or aralkyl; n and m are integers of from 0 to 4; and R³ constitutes a residue derived from an unsaturated dicarboxylic acid or an anhydride thereof.

5. The flame retardant according to any of the preceding claims, **characterized in that** the polyester is end-capped by reaction with a monovalent alcohol or a monocarboxylic acid.

6. The flame retardant according to any of the preceding claims, **characterized in that** the polyester has a phosphorous content of between about 5 and 8.5% by weight.

7. The flame retardant according to any of the preceding claims, **characterized in that** the average molecular weight Mn amounts to more than about 25,000.

8. The flame retardant according to any of the preceding claims, **characterized in that** the average molecular weight Mn amounts to between about 25,000 and 100,000 g/mol, preferably up to about 35,000 g/mol.

9. A thermoplastic polymer composition comprising a thermoplastic polymer selected from the group consisting of polyesters, polysulfones, polyimides and polyamides, polyolefins, polyacrylates, polyetheretherketones, ABS, polyurethanes, polystyrenes, polycarbonates, polyphenylene oxides, unsaturated polyester resins, phenolic resins, and a halogen-free flame retardant according to any of the preceding claims, wherein the polymer composition has a total phosphorous content of between about 0.1 and 5% by weight.

10. The polymer composition according to claim 9, **characterized in that** the thermoplastic polymer is a polyamide that is suitable for melt spinning.

11. The polymer composition according to claim 10, **characterized in that** the polyamide is selected from the group consisting of PA 6, PA 66 and PA 12.

12. The polymer composition according to claim 9, **characterized in that** the thermoplastic polymer is a polyester which is suitable for melt spinning, in particular a polyethylene terephthalate.

13. A method of producing polymer fibers comprising the steps of heating and extruding a polymer composition so as to form filaments, the polymer composition comprising a polymer which is suitable for melt spinning and a flame retardant, the polymer being selected from the group consisting of polyamides and polyesters which are suitable for melt spinning, **characterized in that** the flame retardant used is a phosphoric polyester according to any of the preceding claims 1 to 8 having an average molecular weight Mn of more than 20,000 g/mol.

14. The method according to claim 13, **characterized in that** the polymer is a polyamide, and the polymer composition is added as a master batch having a phosphorous content of from 2 to 5% by weight to a polyamide molding composition which is suitable for melt spinning.

15. The method according to claim 14, **characterized in that** the polyamide of the polymer composition and the polyamide of the polyamide molding composition are identical or different.

16. The method according to claim 13, **characterized in that** the polymer is a polyester, and the polymer composition is added as a master batch having a phosphorous content of from 2 to 5% by weight to a polyester molding composition which is suitable for melt spinning.

17. The method according to any of claims 13 to 16, **characterized in that** the polymer fibers have a total phosphorous content of from 0.1 to 2% by weight.

18. The method according to claim 17, **characterized by** a total phosphorous content of the polymer fibers of from 0.5 to 1% by weight.

19. Use of a halogen-free flame retardant according to any of claims 1 to 8 in the production of thermoplastic molding compositions, the molding compositions being adapted to be processed to molded pieces at temperatures of more than 120°C.

20. The use according to claim 19, **characterized in that** the molded pieces are polyamide fibers or polyester fibers produced using melt spinning methods.

## Revendications

1. Agent ignifuge exempt d'halogène, qui peut être obtenu par polycondensation de monomères contenant du phosphore avec des monomères formant des esters de manière à former un polyester contenant du phosphore, le monomère contenant du phosphore étant choisi parmi les produits d'addition de 9,10-dihydro-9-oxa-10-phospha-phénanthrène-10-oxyde (DOPO) et de dérivés de DOPO substitués sur le noyau à des composés non saturés parmi le groupe des acides carboxyliques monovalents et polyvalents et de leurs anhydrides, et le monomère formant l'ester étant choisi parmi le groupe constitué par les alcools monovalents et polyvalents ou les mélanges de ceux-ci et par les acides carboxyliques monovalents et polyvalents, **caractérisé en ce que** le polyester présente un poids moléculaire moyen Mn de plus de 20.000 pour un degré de polymérisation moyen Pn d'au moins 55.

2. Agent ignifuge selon la revendication 1, **caractérisé en ce que** la viscosité dynamique du polyester à une température de 120°C est d'au moins 200 Pas et est de préférence comprise entre 750 et 1250 Pas.

3. Agent ignifuge selon la revendication 1 ou 2, **caractérisé en ce que** le polyester présente un point de ramollissement compris entre 100 et 130 C.

4. Agent ignifuge selon l'une des revendications précédentes, **caractérisé en ce que** le monomère contenant du phosphore comprend un composé présentant la formule suivante (I) : 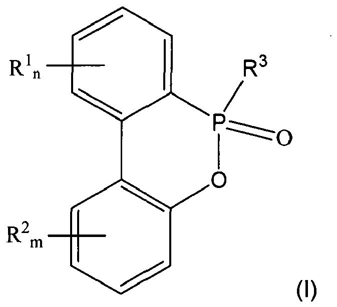 dans laquelle R¹ et R² sont identiques ou différents et représentent chacun, indépendamment l'un de l'autre, de l'alkyle, de l'alcoxyle, de l'aryle, de l'aryloxyle ou de l'aralkyle, et n et m sont des nombres entiers de 0 à 4, et R³ représente un reste dérivé d'un acide dicarboxylique non saturée ou de son anhydride.

5. Agent ignifuge selon l'une des revendications précédentes, **caractérisé en ce que** le polyester est coiffé aux extrémités par réaction avec un alcool monovalent ou un acide monocarboxylique.

6. Agent ignifuge selon l'une des revendications précédentes, **caractérisé en ce que** la teneur en phosphore du polyester est comprise entre 5 et 8,5 % en poids.

7. Agent ignifuge selon l'une des revendications précédentes, **caractérisé en ce que** le poids moléculaire moyen Mn est supérieur à environ 25.000.

8. Agent ignifuge selon l'une des revendications précédentes, **caractérisé en ce que** le poids moléculaire moyen Mn est compris entre environ 25.000 et 100.000 g/mol et s'élève de préférence jusqu'à 35.000 g/mol.

9. Composition polymère thermoplastique, comportant un polymère thermoplastique du groupe des polyesters, des polysulfones, des polyimides et des polyamides, des polyoléfines, des polyacrylates, des polyétheréthercétones, des ABS, des polyuréthanes, des polystyrènes, des polycarbonates, des polyphénylène-oxydes, des résines polyester non saturées, des résines phénoliques, et comportant un agent ignifuge exempt d'halogène selon l'une des revendications précédentes, la teneur totale en phosphore de la composition polymère étant comprise entre environ 0,1 et 5 % en poids.

10. Composition polymère selon la revendication 9, **caractérisée en ce que** le polymère thermoplastique est un polyamide apte à être filé à chaud.

11. Composition polymère selon la revendication 10, **caractérisée en ce que** le polyamide est choisi parmi le groupe constitué de PA 6, PA 66 et PA 12.

12. Composition polymère selon la revendication 9, **caractérisée en ce que** le polymère thermoplastique est un polyester apte à être filé à chaud, en particulier un polytéréphtalate d'éthylène.

13. Procédé de fabrication de fibres polymères, dans lequel une composition polymère est chauffée et extrudée de manière à obtenir des filaments, la composition polymère contenant un polymère apte à être filé à chaud et un agent ignifuge, le polymère étant choisi parmi le groupe constitué de polyamides et polyesters aptes à être filés à chaud, **caractérisé en ce qu'**un polyester contenant du phosphore selon l'une des revendications 1 à 8, présentant un poids moléculaire moyen Mn de plus de 20.000 g/mol est utilisé en tant qu'agent ignifuge.

14. Procédé selon la revendication 13, **caractérisé en ce que** le polymère est un polyamide et **en ce que** la composition polymère est ajoutée en tant que mélange-maître avec une teneur en phosphore de 2 à 5 % en poids à une matière à mouler de polyamide apte à être filée à chaud.

15. Procédé selon la revendication 14, **caractérisé en ce que** le polyamide de la composition polymère et le polyamide de la matière à mouler de polyamide sont identiques ou différentes.

16. Procédé selon la revendication 13, **caractérisé en ce que** le polymère est un polyester et **en ce que** la composition polymère est ajoutée en tant que mélange-maître avec une teneur en phosphore de 2 à 5 % en poids à une matière à mouler de polyester apte à être filée à chaud.

17. Procédé selon l'une des revendications 13 à 16, **caractérisé en ce que** les fibres polymères présentent une teneur totale en phosphore de 0,1 à 2 % en poids.

18. Procédé selon la revendication 17, **caractérisé par** une teneur totale en phosphore des fibres polymères de 0,5 à 1 % en poids.

19. Utilisation d'un agent ignifuge exempt d'halogène selon l'une des revendications 1 à 8 pour la fabrication de matières à mouler thermoplastiques, les matières à mouler étant aptes à être usinées à des températures supérieures à 120°C de manière à obtenir des corps moulés.

20. Utilisation selon la revendication 19, **caractérisée en ce que** les corps moulés sont des fibres de polyamide ou des fibres de polyester fabriquées au moyen de procédés de filage à chaud.
